# FASCICULE DE BREVET EUROPEEN

(11) **EP 3 503 149 B1**
(45) Date de publication et mention de la délivrance du brevet: **20.05.2020**
(21) Numéro de dépôt: 18190145.5
(22) Date de dépôt: 22.08.2018
(51) Int. Cl.: H01H 23/00, H01H 23/30, H01H 25/04

(54) **MÉCANISME DE COMMANDE ÉLECTRIQUE, ET AERONEF**
ELEKTRISCHER STEUERMECHANISMUS UND LUFTFAHRZEUG
ELECTRICAL CONTROL MECHANISM, AND AIRCRAFT

(30) Priorité: 19.12.2017 FR 1771383
(43) Date de publication de la demande: 26.06.2019
(73) Titulaire: Airbus Helicopters, 13725 Marignane Cedex (FR)
(72) Inventeur: ABDELLI, Kamel, 13011 Marseille (FR); SELLIER, Olivier, 13510 Eguilles (FR)
(74) Mandataire: GPI & Associés

(56) Documents cités:
- EP-A1- 1 911 629
- EP-A1- 2 743 953

## Description

La présente invention concerne un mécanisme de commande électrique et un aéronef.

En particulier, le mécanisme de commande électrique est adapté pour commander le pas collectif des pales d'une hélice ou d'un rotor d'un aéronef.

Un mécanisme de commande peut comprendre par exemple un bouton à bascule en forme de chapeau chinois, à savoir en forme d'accent circonflexe en coupe. Ce mécanisme de commande peut être agencé sur le sommet d'un manche afin que le pilote d'un aéronef puisse le manœuvrer avec son pouce par exemple.

La détection précise de l'instant où un pilote donne volontairement un ordre de commande en manœuvrant ce mécanisme de commande et la détection d'une panne de ce mécanisme de commande sont intéressantes. En effet, un ordre de commande peut être donné involontairement suite à un mouvement nerveux du pouce du pilote. Or, un ordre de commande erratique et/ou non désiré peut de fait être gênant sur un aéronef, par exemple durant une phase de vol proche d'un obstacle.

Par ailleurs, un tel bouton à bascule peut être utilisé pour augmenter le pas collectif des pales d'une hélice ou d'un rotor lorsque le bouton est basculé selon un premier sens à partir d'une position neutre. Le déplacement du bouton à bascule à partir de la position neutre selon un deuxième sens induit au contraire la réduction de ce pas collectif.

Toutefois, lorsque le pilote bascule le bouton selon le premier sens, le retour de ce bouton vers une position neutre peut être considéré à tort comme un ordre de réduction du pas collectif.

Les documents WO 2016/043942 et WO 2016/043943 sont connus et éloignés de l'invention. Le document WO 2016/043942 décrit un mécanisme de commande qui est muni d'un bouton rotatif. Ce bouton rotatif est solidaire en rotation d'un arbre d'un moteur. Un encodeur détermine alors la position angulaire de l'arbre.

Le document WO 2016/043943 décrit un mécanisme de commande qui est muni d'un bouton mobile entre une position neutre et une pluralité de positions non neutres. Une première position non neutre induit le déplacement des pales d'une hélice selon une première direction, une deuxième position non neutre induit le déplacement des pales d'une hélice selon une deuxième direction et une troisième position non neutre provoque le déplacement des pales d'une hélice dans des positions induisant une poussée nulle générée par l'hélice.

Le document FR 1601481 ou US20180099739 décrit un dispositif de commande électrique muni d'un moyen de manœuvre. Le dispositif de commande électrique comprend un premier système de mesure et un deuxième système de mesure qui réalisent respectivement une première mesure et une deuxième mesure de la position courante du moyen de manœuvre. Une unité de traitement compare la première mesure et la deuxième mesure pour générer un signal de commande en fonction de ladite position courante, ladite unité de traitement considérant que le moyen de manœuvre est dans une position neutre lorsque la première mesure et la deuxième mesure ne correspondent pas à une même position du moyen de manœuvre. Les documents EP1911629 et EP2743953 ont été considérés.

La présente invention a alors pour objet de proposer un mécanisme de commande susceptible de détecter la présence d'un ordre donné volontairement en éloignant le bouton de manœuvre d'une position neutre et de générer un ordre d'arrêt durant un retour du bouton de manœuvre vers la position neutre.

Un tel mécanisme de commande électrique est muni d'un support et d'un bouton. Par exemple, le bouton est un bouton à bascule et par exemple du type chapeau chinois.

Le mécanisme de commande comporte un corps central disposé dans le support, le corps central présentant uniquement un degré de liberté en rotation autour d'un axe de rotation central par rapport au support. Le bouton est porté par le corps central et présente uniquement un degré de liberté en rotation par rapport au corps central autour d'un axe de rotation déporté. L'axe de rotation déporté est parallèle à l'axe de rotation central. Un premier moyen de rappel est interposé entre le corps central et le bouton et exerçant un effort sur le bouton pour le positionner dans une position neutre, un deuxième moyen de rappel étant interposé entre le corps central et le support et exerçant un effort sur le corps central pour positionner ledit bouton dans ladite position neutre. Le mécanisme de commande comprend deux interrupteurs primaires électriques interposés entre le bouton et le corps central de part et d'autre d'un plan contenant ledit axe de rotation central et ledit axe de rotation déporté pour détecter une rotation du bouton par rapport au corps central, ledit mécanisme de commande comprenant deux interrupteurs secondaires électriques interposés entre le support et le corps central de part et d'autre dudit plan pour détecter une rotation du corps central par rapport au support.

Le terme « interposé » indique que l'interrupteur associé change d'état en fonction d'un mouvement relatif entre les organes associés.

Dès lors, le mécanisme de commande comporte deux organes mobiles en rotation, à savoir le corps central et le bouton. Chaque organe mobile est associé à un moyen de rappel qui tend à placer le bouton dans une position neutre au repos.

De plus, le bouton est monté mobile en rotation sur le corps central. Par suite, lorsqu'un pilote exerce un effort volontaire sur le bouton, le bouton et le corps central effectuent tous deux une rotation selon un même sens.

Le mécanisme de commande comporte alors quatre interrupteurs pour détecter une rotation du bouton et du corps central selon deux sens opposés. Les deux interrupteurs primaires sont ainsi disposés entre le bouton et le corps central pour détecter une rotation du bouton autour de son axe de rotation déporté selon deux sens opposés, et deux interrupteurs secondaires sont disposés entre le corps central et le support pour détecter une rotation du corps central autour de son axe de rotation central selon deux sens opposés.

Chaque interrupteur peut comprendre deux contacts électriques, disposés sur les éléments associés par une méthode de plastronique par exemple. Lorsque les deux contacts d'un interrupteur se touchent, cet interrupteur est alors dans un état fermé, l'interrupteur étant dans le cas contraire dans un état ouvert. L'état d'un interrupteur peut être déterminé par des méthodes usuelles, par exemple via une mesure d'impédance.

Un tel mécanisme de commande permet de déterminer précisément si un ordre est donné volontairement. Dans cette hypothèse, le mouvement du pilote induit la rotation du bouton et du corps central. Dès lors, un interrupteur primaire et un interrupteur secondaire associé doivent changer d'état lorsque l'ordre est donné volontairement. Si le doigt du pilote en contact avec le bouton vibre nerveusement, seul le bouton ou le corps central bouge et l'ordre n'est alors pas considéré.

De plus, ce mécanisme de commande permet de déterminer précisément quand le pilote décide de stopper la commande. Dans ce cas de figure, les moyens de rappel ramènent le bouton dans sa position neutre. Néanmoins, le bouton et le corps peuvent se déplacer à des vitesses différentes et/ou peuvent nécessiter des courses différentes pour changer d'état. Ce mouvement peut alors être détecté rapidement par le changement d'état d'un unique interrupteur ce qui permet de stopper rapidement la commande, à savoir avant le retour du bouton dans sa position neutre.

Dans le cadre de la commande du pas collectif d'un rotor ou d'une hélice, un déplacement du bouton dans le sens dextrorsum ou le sens senestrorsum commande une variation positive ou négative du pas collectif des pales. Une fois le bouton relâché, les interrupteurs permettent de détecter ce relâchement pour stopper la commande de variation de pas rapidement et éviter que le déplacement du bouton vers sa position neutre induise une commande « résiduelle » non désirée, le temps du retour à la position neutre du bouton dépendant de fait du mécanisme de rappel.

Le mécanisme de commande permet donc une double confirmation d'un ordre de variation de pas par rotation angulaire du corps central et du bouton, ainsi que la détection rapide et prioritaire de l'arrêt de cet ordre de variation de pas. Dans le cadre d'une hélice ou d'un rotor, cette caractéristique permet de fiabiliser le contrôle du pas des pales d'une manière inédite.

Le mécanisme de commande peut comprendre une ou plusieurs des caractéristiques additionnelles qui suivent.

Ainsi, un rayon d'un cercle centré sur ledit axe de rotation central peut être disposé dans ledit plan.

Dès lors, le plan s'étend diamétralement au regard de ce cercle. Ce cercle peut s'étendre le cas échéant le long d'une face en forme de calotte sphérique d'une âme du corps.

L'axe de rotation déporté est ainsi déporté radialement par rapport à l'axe de rotation central, au regard d'un cercle centré sur cet axe de rotation central.

Selon un autre aspect, le support peut être localement ouvert sur un milieu extérieur, le bouton s'étendant au moins partiellement dans le milieu extérieur.

Tout le bouton ou seulement une partie du bouton est localisé en dehors du support pour être manœuvré par un pilote.

Selon une autre variante, le premier moyen de rappel peut présenter une raideur inférieure à la raideur du deuxième moyen de rappel.

Lorsqu'un pilote exerce un effort volontaire sur ce bouton, le corps central est alors nécessairement mis en mouvement après que le bouton ait effectué une rotation par rapport au corps central. Cette configuration permet d'être certain que les interrupteurs primaires et les interrupteurs secondaires sont sollicités lors du mouvement du bouton et du corps central.

Selon un aspect, le premier moyen de rappel peut comporter au moins deux organes élastiques situés de part et d'autre dudit plan, chaque organe élastique ayant une raideur inférieure au deuxième moyen de rappel.

Par exemple, chaque organe élastique peut comprendre un ressort et/ou un bloc élastomère.

Chaque organe élastique peut s'étendre d'une face du corps central jusqu'à une face du bouton.

Les deux organes élastiques peuvent être disposés symétriquement de part et d'autre dudit plan.

Les deux organes élastiques peuvent chacun exercer un effort sur le bouton pour tendre à placer les interrupteurs primaires dans leurs états fermés.

Les deux organes élastiques peuvent être suffisamment raides pour positionner les interrupteurs primaires dans leurs états fermés en contrant la force d'accélération subie lors du retour vers la position neutre du bouton.

Selon un aspect, le deuxième moyen de rappel peut comporter un ressort solidaire dudit support et dudit corps central.

Par exemple, le support peut comporter une cage portant une tige de pivot, le corps central tournant autour de cette tige de pivot. Éventuellement, le deuxième moyen de rappel peut comporter un ressort fixé à cette tige de pivot et au corps central.

Selon un aspect, les deux interrupteurs primaires peuvent comprendre chacun un contact métallique primaire interne fixé au corps central et un contact métallique primaire externe fixé au bouton, le contact métallique primaire interne de chaque interrupteur primaire étant en contact avec le contact métallique primaire externe de cet interrupteur primaire lorsque le bouton est dans la position neutre.

Les interrupteurs primaires sont alors chacun dans un état fermé au repos, à savoir lorsque le bouton est dans sa position neutre.

Un pilote peut tendre à positionner en permanence un doigt sur le bouton durant une phase d'attente pour pouvoir générer rapidement un ordre en manœuvrant ce bouton. Le maintien des interrupteurs primaires dans l'état fermé au repos, permet d'éviter que la pression du doigt du pilote durant une telle phase d'attente génère un changement d'état des interrupteurs primaires. Les interrupteurs primaires sont dans leurs états fermés avant que le pilote pose son doigt sur le bouton, et restent dans ces états fermés tant que le pilote ne déplace pas le bouton.

Selon un aspect, le contact métallique primaire interne et le contact métallique primaire externe de chacun desdits deux interrupteurs primaires peuvent comporter chacun une lamelle primaire élastiquement déformable.

Les lamelles primaires d'un interrupteur primaire peuvent ainsi se déformer, par exemple en s'aplatissant lorsque le bouton effectue une rotation par rapport au corps central.

Selon un aspect, les deux interrupteurs secondaires peuvent comprendre chacun un contact métallique secondaire interne fixé au corps central et un contact métallique secondaire externe fixé au support, le contact métallique secondaire interne d'un interrupteur secondaire n'étant pas en contact avec le contact métallique secondaire externe de cet interrupteur secondaire lorsque le bouton est dans la position neutre.

Les interrupteurs secondaires sont alors chacun dans un état ouvert au repos, à savoir lorsque le bouton est dans sa position neutre.

Selon un aspect, le contact métallique secondaire interne de chacun desdits deux interrupteurs secondaires comporte une lamelle secondaire élastiquement déformable et ledit contact métallique secondaire externe de chacun desdits deux interrupteurs secondaires comporte une lame apte à être en contact contre la lamelle élastiquement déformable, et éventuellement non déformable voire en forme d'un arc de cercle.

La lamelle secondaire d'un interrupteur secondaire peut ainsi s'étendre du support au corps central lorsque l'interrupteur secondaire est ouvert pour guider la rotation du corps central. La lamelle secondaire s'aplatit alors quand cette lamelle secondaire entre en contact avec la lame de cet interrupteur secondaire. La lame d'un interrupteur secondaire peut être dimensionnée pour présenter une longueur supérieure au débattement angulaire maximal du corps central.

Selon un aspect, les contacts métalliques primaires externes desdits deux interrupteurs primaires et lesdits contacts métalliques secondaires externes desdits deux interrupteurs secondaires sont respectivement reliés à quatre liaisons électriques de sortie destinées à être reliées à une masse électrique.

Selon un aspect, les contacts métalliques primaires internes desdits deux interrupteurs primaires et lesdits contacts métalliques secondaires internes desdits deux interrupteurs secondaires sont respectivement reliés à quatre liaisons électriques d'entrée destinées à être reliées à une source d'énergie électrique.

Eventuellement, un capteur permet de mesurer une tension électrique ou une impédance entre la liaison électrique d'entrée et la liaison électrique de sortie d'un interrupteur pour détecter l'état de cet interrupteur.

Selon un aspect, lorsque ledit bouton est dans la position neutre :
- lesdits contacts métalliques primaires internes desdits deux interrupteurs primaires peuvent être disposés symétriquement de part et d'autre dudit plan,
- lesdits contacts métalliques secondaires internes desdits deux interrupteurs secondaires peuvent être disposés symétriquement de part et d'autre dudit plan,
- lesdits contacts métalliques primaires externes desdits deux interrupteurs primaires peuvent être disposés symétriquement de part et d'autre dudit plan,
- lesdits contacts métalliques secondaires externes desdits deux interrupteurs secondaires peuvent être disposés symétriquement de part et d'autre dudit plan.

Selon un aspect, le corps central peut être articulé au support par une liaison pivot centrale, le bouton étant articulé au corps central par une liaison pivot déportée.

Selon un aspect, le corps central peut comporter une âme disposée autour d'une tige de pivot du support, ladite âme portant un pion via une tige de liaison, ledit bouton comprenant un renfoncement dans lequel est disposé sur le pion.

Un tel pion peut comprendre un cylindre, le bouton étant emmanché sur ce cylindre pour uniquement avoir un degré de liberté en rotation par rapport au cylindre, et donc par rapport au corps central.

L'invention vise aussi un aéronef comprenant au moins un système propulsif générant une poussée, par exemple une hélice ou un rotor.

Cet aéronef peut alors comporter un mécanisme de commande électrique selon l'invention, ledit mécanisme de commande électrique étant relié au système propulsif pour contrôler au moins partiellement ladite poussée.

Lorsque le système propulsif comprend une pluralité de pales à pas variable mobiles en rotation, le système propulsif comprenant un système de modification de pas pour modifier ledit pas, ledit mécanisme de commande peut être relié à un calculateur, ledit calculateur commandant ledit système de modification de pas.

Une commande indépendante du mécanisme de commande et prioritaire peut permettre de positionner sur requête les pales dans une position générant un poussée nulle
En outre, l'invention a aussi pour objet un procédé pour commander un système propulsif avec le mécanisme de commande de l'invention.

Sans action du pilote, le procédé comporte une étape de positionnement du bouton dans la position neutre, lesdits deux interrupteurs primaires électriques et lesdits deux interrupteurs secondaires électriques étant soit dans un état initial fermé ou soit dans un état initial ouvert. Le procédé comporte alors successivement les étapes suivantes :
- génération et transmission d'un ordre pour modifier une poussée générée par ledit système propulsif lorsque seuls un interrupteur primaire électrique et un interrupteur secondaire électrique situés de part et d'autre dudit plan changent d'état,
- arrêt de ladite transmission dès qu'un desdits interrupteur primaire électrique et interrupteur secondaire électrique ayant changé d'état retourne dans son état initial.

Selon une réalisation, dans la position neutre les deux interrupteurs primaires électriques sont dans un état fermé et les deux interrupteurs secondaires électriques sont dans un état ouvert. Le tableau suivant indique l'ordre pouvant être généré par un calculateur en fonction de l'état des différents interrupteurs.

| Premier interrupteur secondaire | deuxième interrupteur secondaire | Premier interrupteur primaire | deuxième interrupteur primaire | Ordre donné |
|---|---|---|---|---|
| ouvert | ouvert | ouvert | ouvert | Aucun ordre |
| ouvert | ouvert | ouvert | fermé | Aucun ordre |
| ouvert | ouvert | fermé | ouvert | |
| ouvert | ouvert | fermé | fermé | |
| ouvert | fermé | ouvert | ouvert | Aucun ordre |
| ouvert | fermé | ouvert | fermé | Variation négative de la poussée |
| ouvert | fermé | fermé | ouvert | Aucun ordre |
| ouvert | fermé | fermé | fermé | Arrêt de la variation négative de la poussée |
| fermé | ouvert | ouvert | ouvert | Aucun ordre |
| fermé | ouvert | ouvert | fermé | Aucun ordre |
| fermé | ouvert | fermé | ouvert | Variation positive de la poussée |
| fermé | ouvert | fermé | fermé | Arrêt de la variation positive de la poussée |
| fermé | fermé | ouvert | ouvert | Aucun ordre |
| fermé | fermé | ouvert | fermé | |
| fermé | fermé | fermé | ouvert | |
| fermé | fermé | fermé | fermé | |

La course des interrupteurs secondaires peut notamment être réglée pour que les interrupteurs primaires se ferment avant qu'un interrupteur secondaire dans un état fermé s'ouvre lorsqu'un pilote relâche le bouton.

L'invention et ses avantages apparaîtront avec plus de détails dans le cadre de la description qui suit avec des exemples donnés à titre illustratif en référence aux figures annexées qui représentent :
- la figure 1, un schéma illustrant un mécanisme de commande selon l'invention,
- la figure 2, un schéma illustrant un agencement d'un bouton,
- la figure 3, un schéma illustrant un système muni d'un mécanisme de commande selon l'invention, et
- les figures 4 et 5, des schémas illustrant un aéronef muni d'un mécanisme de commande selon l'invention.

Les éléments présents dans plusieurs figures distinctes sont affectés d'une seule et même référence.

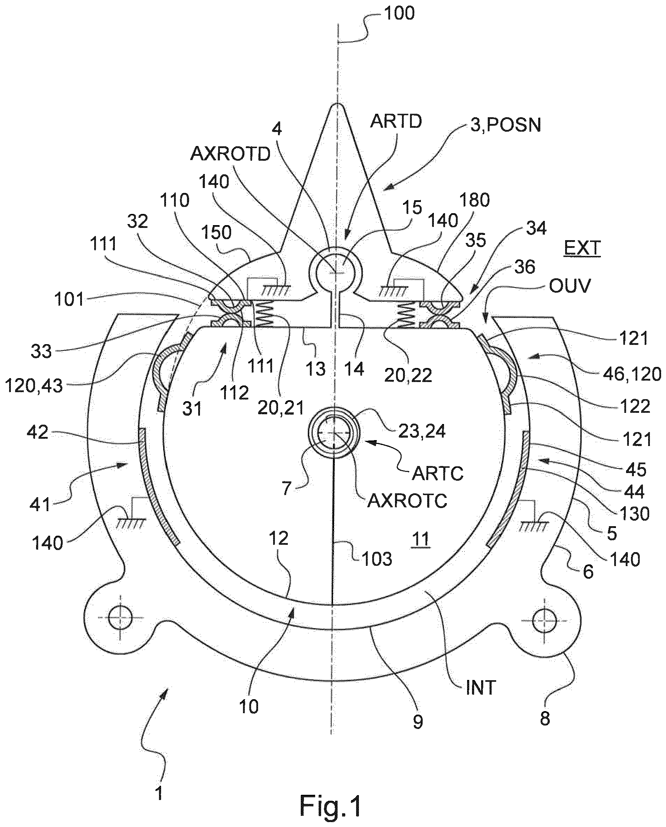

Le figure 1 présente un mécanisme de commande 1 du type de l'invention.

Ce mécanisme de commande 1 est pourvu d'un support 5. Le support 5 comporte une cage extérieure 6. La cage extérieure 6 sépare un espace interne INT présent à l'intérieur du support 5 d'un milieu extérieur EXT situé à l'extérieur du support 5. Toutefois, la cage extérieure 6 présente une ouverture OUV mettant en communication l'espace interne INT et le milieu extérieur EXT.

La cage extérieure peut comprendre une face interne de support 9 en regard de l'espace interne INT. Cette face interne de support 9 peut avoir la forme d'un cylindre tronqué à base circulaire ou encore une forme de calotte sphérique par exemple.

La cage extérieure 6 peut comprendre des moyens de fixation 8 permettant de fixer le mécanisme de commande à un organe, par exemple un manche. Selon l'exemple représenté, les moyens de fixation comprennent des oreilles 8 à visser à un organe.

Par ailleurs, le mécanisme de commande 1 comporte un corps central 10. Ce corps central 10 est agencé au moins partiellement voire entièrement dans l'espace interne INT du support 5.

Ce corps central 10 présente uniquement un degré de liberté en rotation autour d'un axe de rotation central AXROTC par rapport au support 5. Dès lors, le corps central 10 peut être articulé par une liaison pivot centrale ARTC au support 5. Eventuellement, la liaison pivot centrale ARTC comporte une tige de pivot 7 solidaire de la cage extérieure 6, l'axe de rotation central AXROTC représentant un axe de symétrie de la tige de pivot 7. Dès lors, le corps central 10 possède une âme 11 emmanchée autour de la tige de pivot 7. Eventuellement, la liaison pivot centrale ARTC peut comprendre au moins un organe favorisant une rotation de l'âme 11 autour de la tige de pivot 7, tel par exemple un roulement à billes ou équivalents et/ou un palier lisse...

Par ailleurs, l'âme 11 présente une face externe d'âme 12 en regard de la face interne de support 9. Cette face externe d'âme 12 peut avoir la forme d'un cylindre tronqué à base circulaire ou encore une forme de calotte sphérique par exemple.

Selon un autre aspect, le mécanisme de commande 1 comporte un bouton 3. Le terme « bouton » désigne un organe pouvant être déplacé par un pilote. Selon l'exemple de la figure 1, le bouton est un bouton en forme de chapeau chinois.

Le bouton 3 s'étend au moins partiellement voire totalement dans le milieu extérieur EXT, au moins lorsque le bouton 3 est disposée dans la position dite « position neutre » illustrée sur la figure 1.

Le bouton 3 est porté par le corps central 10. Toutefois, le bouton 3 présente au moins un degré de liberté par rapport au corps central 10 voire un unique degré de liberté par rapport au corps central 10, à savoir un degré de liberté en rotation autour d'un axe de rotation déporté AXROTD.

Cet axe de rotation déporté AXROTD est parallèle à l'axe de rotation central AXROTC. De plus, l'axe de rotation déporté AXROTD et l'axe de rotation central AXROTC sont coplanaires en étant contenus dans un même plan 100. Ce plan 100 peut être un plan de symétrie du corps central 10, voire du bouton 3 dans la position neutre POSN. Ce plan 100 peut contenir en outre un rayon 103 d'un cercle 101 centré sur l'axe de rotation central AXROTC. Un tel cercle peut épouser localement la face interne de support 9 voire une face 180 du bouton 3. Dès lors, l'axe de rotation déporté AXROTD est déporté radialement par rapport à l'axe de rotation central AXROTC.

Dès lors, le bouton 3 peut être articulé par une liaison pivot déportée ARTD au support 5. Éventuellement, la liaison pivot déportée ARTD comporte une tige de liaison 14 solidaire de l'âme. Cette tige de liaison 14 peut présenter un axe d'extension voire de symétrie contenu dans le plan 100. La liaison pivot déporté ARTD peut de plus comprendre un pion 15, la tige de liaison 14 s'étendant alors d'une extrémité solidaire de l'âme 11 jusqu'à une extrémité solidaire du pion 15. Dès lors, le bouton 3 est emmanché autour du pion 15, ce pion 15 étant disposé dans un renfoncement 4 du bouton 3. Éventuellement la liaison pivot déportée ARTD peut comprendre au moins un organe favorisant une rotation du bouton 3 autour du pion 15, tel par exemple un roulement à billes ou autres et/ou un palier lisse...

Par ailleurs, le mécanisme de commande 1 comporte un premier moyen de rappel 20 et un deuxième moyen de rappel 23.

Une rotation autour de l'axe de rotation central AXROTD du bouton 3 selon l'un des sens dextrorsum ou senestrorsum entraîne une rotation du corps central 10 l'axe de rotation central AXROTC selon le même sens respectivement dextrorsum ou senestrorsum. Éventuellement, comme illustré sur les figures 1-2, e.g. pour commander une variation positive du pas collectif de pales, le bouton 3 est manœuvré pour opérer un déplacement du bouton 3 et du corps central 10 dans le même sens dextrorsum auquel tendent à s'opposer les premier moyen de rappel 20 et deuxième moyen de rappel 23. Dans le même exemple, pour commander une variation négative du pas collectif, le bouton 3 est manœuvré pour opérer un déplacement du bouton 3 et du corps central 10 dans le même sens senestrorsum, à l'encontre des moyens de rappel 20 et 23.

Le premier moyen de rappel 20 et le deuxième moyen de rappel 23 exercent respectivement des efforts sur le bouton 3 et le corps central 10 pour positionner le bouton 3 dans la position neutre POSN. Éventuellement, le premier moyen de rappel 20 présente une raideur inférieure à la raideur du deuxième moyen de rappel 23. Chaque organe élastique du premier moyen de rappel 20 peut ainsi présenter une raideur inférieure à la raideur de chaque organe du deuxième moyen de rappel 23. Le premier moyen de rappel 20 est interfacé entre le corps central 10 et le bouton 3. Par exemple, le premier moyen de rappel 20 comporte au moins un premier organe élastique 21 et un deuxième organe élastique 22 situés de part et d'autre du plan 100, éventuellement de manière symétrique. Par exemple, le premier moyen de rappel 20 comporte au moins une paire d'organes élastiques situés de part et d'autre du plan 100. Chaque organe élastique 21, 22 peut alors présenter une raideur inférieure au deuxième moyen de rappel 23.

Selon l'illustration de la figure 1, le bouton 3 est situé au dessus de l'âme 11 au regard d'un sens allant de l'axe de rotation central AXROTC vers l'axe de rotation déporté AXROTD. Chaque organe élastique peut alors s'étendre d'un sommet de l'âme 11 jusqu'à un fond du bouton 3.

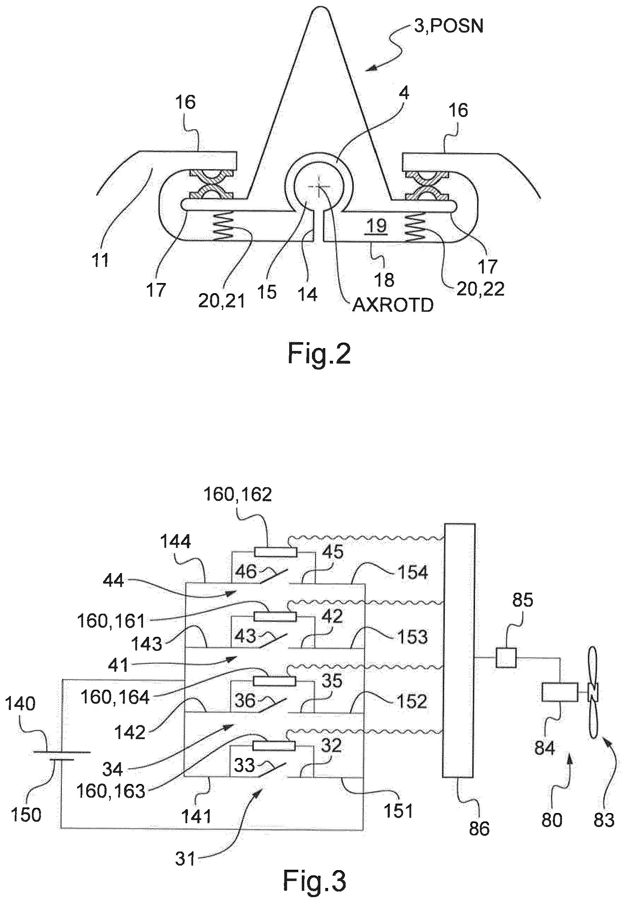

Selon l'illustration de la figure 2, le bouton 3 comporte des ailes 17 situées dans une niche 19 de l'âme 11 du corps central 10. Une telle niche 19 de l'âme peut être délimitée par une face intérieure 18 de l'âme portant la tige de liaison 14 et deux ailettes 16, les ailettes étant par exemple sensiblement parallèles à la face intérieure 18. Dès lors, chaque organe élastique peut s'étendre entre la face intérieure 18 de l'âme et une aile 17 du bouton 3. Indépendamment de cet aspect et en référence à la figure 1, le deuxième moyen de rappel 23 est interfacé entre le corps central 10 et le support 5. Par exemple, le deuxième moyen de rappel 23 comporte un ressort 24 solidaire du support 5 et du corps central 10. Chaque organe élastique 21, 22 peut alors présenter une raideur inférieure au ressort 24. Un tel ressort 24 peut par exemple être fixé à la tige de pivot 7 et à l'âme 11 du corps central 10.

Par ailleurs, le mécanisme de commande 1 comprend deux interrupteurs primaires 31, 34 électriques pour déterminer la position du bouton 3 par rapport au corps central 10. Ces deux interrupteurs primaires 31, 34 sont interposés entre le bouton 3 et le corps central 10. De plus, ces deux interrupteurs primaires 31, 34 comprennent un premier interrupteur primaire 31 et un deuxième interrupteur primaire 34 disposés de part et d'autre du plan 100 au moins dans la position neutre, et donc de la tige de liaison 14. Par exemple, le premier organe élastique 21 est disposé latéralement entre le plan 100 et le premier interrupteur primaire 31, le deuxième organe élastique 22 étant disposé latéralement entre le plan 100 et le deuxième interrupteur primaire 34. Chaque interrupteur primaire 31, 34 est muni d'un contact métallique primaire interne 33, 36 fixé au corps central 10 et un contact métallique primaire externe 32, 35 fixé au bouton 3. Ainsi, le premier interrupteur primaire 31 comporte un premier contact métallique primaire interne 33 fixé au corps central 10 et un premier contact métallique primaire externe 32 fixé au bouton 3, le deuxième interrupteur primaire 31 comportant un deuxième contact métallique primaire interne 36 fixé au corps central 10 et un deuxième contact métallique primaire externe 35 fixé au bouton 3. Lorsque le bouton 3 est dans la position neutre, le premier contact métallique primaire interne 33 et le deuxième contact métallique primaire interne 36 sont par exemple disposés symétriquement de part et d'autre dudit plan 100. De même, le premier contact métallique primaire externe 32 et le deuxième contact métallique primaire externe 35 sont par exemple disposés symétriquement de part et d'autre dudit plan 100.

En outre, le contact métallique primaire interne 33, 36 de chaque interrupteur primaire 31, 34 est alors en contact avec le contact métallique primaire externe 32, 35 de cet interrupteur primaire 31, 34. Ainsi, le premier contact métallique primaire interne 33 de premier interrupteur primaire 31 est alors en contact avec le premier contact métallique primaire externe 32 de ce premier interrupteur primaire 31. De même, le deuxième contact métallique primaire interne 36 du deuxième interrupteur primaire 34 est alors en contact avec le deuxième contact métallique primaire externe 35 de ce deuxième interrupteur primaire 34.

Éventuellement, chaque contact métallique primaire interne 33, 36 et chaque contact métallique primaire externe 32, 35 comporte chacun une lamelle primaire 110 élastiquement déformable. Chaque lamelle primaire 110 peut comporter un tronçon central 112 bombé susceptible de s'aplatir qui est disposé entre deux tronçons d'extrémité 111 fixés à l'organe concerné.

Par ailleurs, le mécanisme de commande comprend au moins deux interrupteurs secondaires 41, 44 électriques pour déterminer la position du corps central 10 par rapport au support 5. Ces deux interrupteurs secondaires 41, 44 sont alors agencés entre le support 5 et le corps central 10. De plus, ces deux interrupteurs secondaires 41, 44 comprennent un premier interrupteur secondaire 41 et un deuxième interrupteur secondaire 44 disposés de part et d'autre du plan 100.

Chaque interrupteur secondaire 41, 44 comprend un contact métallique secondaire interne 43, 46 fixé au corps central 10, par exemple sur la face externe d'âme 12, et un contact métallique secondaire externe 42, 45 fixé au support 5, par exemple sur la face interne de support 9. Ainsi, le premier interrupteur secondaire 41 comprend un premier contact métallique secondaire interne 43 fixé au corps central 10 et un premier contact métallique secondaire externe 42 fixé au support 5. De même, le deuxième interrupteur secondaire 44 comprend un deuxième contact métallique secondaire interne 46 fixé au corps central 10 et un deuxième contact métallique secondaire externe 45 fixé au support 5.

Lorsque le bouton 3 est dans la position neutre, le premier contact métallique secondaire interne 43 et le deuxième contact métallique secondaire interne 46 sont par exemple disposés symétriquement de part et d'autre dudit plan 100. De même, le premier contact métallique secondaire externe 42 et le deuxième contact métallique secondaire externe 45 sont par exemple disposés symétriquement de part et d'autre dudit plan 100.

En outre, le contact métallique secondaire interne 43, 46 d'un interrupteur secondaire 41, 44 n'est dans cette position neutre pas en contact avec le contact métallique secondaire externe 42, 45 de cet interrupteur secondaire 41, 44. Ainsi, le premier contact métallique secondaire interne 43 du premier interrupteur secondaire 41 n'est pas en contact avec le premier contact métallique secondaire externe 42 de ce premier interrupteur secondaire 41. De même, le deuxième contact métallique secondaire interne 46 du deuxième interrupteur secondaire 44 n'est pas en contact avec le deuxième contact métallique secondaire externe 45 de ce deuxième interrupteur secondaire 44.

Selon un autre aspect, le contact métallique secondaire interne 43, 46 de chaque interrupteur secondaire 41, 44 peut comporter une lamelle secondaire 120 élastiquement déformable. Une telle lamelle secondaire 120 peut comporter un tronçon central 122 bombé susceptible de s'aplatir qui est disposé entre deux tronçons d'extrémité 121 fixés à la face externe d'âme 12 du corps central 10.

En outre, le contact métallique secondaire externe 42, 45 de chaque interrupteur secondaire 41, 44 peut comporter une lame 130 accolée à la face interne de support 9.

Selon un autre aspect, les deux contacts métalliques primaires externes 32, 35 des deux interrupteurs primaires 31, 34 et les deux contacts métalliques secondaires externes 42, 45 des deux interrupteurs secondaires 41, 44 sont respectivement reliés à quatre liaisons électriques de sortie 151, 152, 153, 154. Chaque liaison électrique de sortie peut comprendre 'au moins un fil et/ou au moins une piste électrique.

De même, les deux contacts métalliques primaires internes 33, 36 des deux interrupteurs primaires 31, 34 et les deux contacts métalliques secondaires internes 43, 46 des deux interrupteurs secondaires 41, 44 sont respectivement reliés à quatre liaisons électriques d'entrée 141, 142, 143, 144. Chaque liaison électrique d'entrée peut comprendre au moins un fil et/ou au moins une piste électrique.

En référence à la figure 3, le mécanisme de commande peut être intégré dans un ensemble commandé comprenant un organe commandé par ce mécanisme de commande.

Dès lors, les quatre liaisons électriques de sortie 151, 152, 153, 154 sont reliées à une masse électrique 150 et les quatre liaisons électriques d'entrée 141, 142, 143, 144 sont reliées à une source d'énergie électrique 140.

Dès lors, cet ensemble commandé comporte un calculateur 86 pour générer un ordre en fonction de la position angulaire du bouton par rapport au corps central, et de la position angulaire du corps central par rapport au support.

Ce calculateur 86 peut comprendre par exemple un processeur, un circuit intégré, un système programmable, un circuit logique, ces exemples ne limitant pas la portée donnée à l'expression « calculateur ».

Pour évaluer la position du corps mobile et du bouton, l'ensemble commandé peut comporter au moins un capteur 160 scrutant le mécanisme de manœuvre, chaque capteur étant relié au calculateur par une liaison filaire ou non filaire. Par exemple, un premier capteur d'impédance 161 est monté en parallèle du premier interrupteur secondaire 41, un deuxième capteur d'impédance 162 est monté en parallèle du deuxième interrupteur secondaire 44, un troisième capteur d'impédance 163 est monté en parallèle du premier interrupteur primaire 31, un quatrième capteur d'impédance 164 est monté en parallèle du deuxième interrupteur primaire 34.

Lorsqu'un capteur mesure une impédance haute, ce capteur envoie un signal au calculateur indiquant que l'interrupteur associé est ouvert.

En fonction des données obtenues, le calculateur peut alors commander au moins un actionneur, par exemple un actionneur 85 d'un système propulsif 80. Selon l'exemple représenté, l'actionneur 85 pilote alors une servocommande 84, cette servocommande pilotant le pas des pales 83 d'un rotor ou d'une hélice.

Par exemple, les deux interrupteurs secondaires 41, 44 et les deux interrupteurs primaires 31, 34 sont soit dans un état initial fermé ou soit dans un état initial ouvert lorsque le bouton est dans la position neutre.

Le calculateur génère et transmet alors un ordre pour modifier une poussée générée par ledit système propulsif 80 lorsque seuls un interrupteur primaire électrique et un interrupteur secondaire électrique situés de part et d'autre dudit plan change d'état.

De plus, le calculateur arrête de transmettre ledit ordre dès qu'un des interrupteur primaire et interrupteur secondaire électriques ayant changé d'état retourne dans son état initial.

Plus précisément, les deux interrupteurs secondaires peuvent être dans un état ouvert et les deux interrupteurs primaires peuvent être dans un état fermé lorsque le bouton est en position neutre.

Si le premier interrupteur primaire s'ouvre et le deuxième interrupteur secondaire se ferme, alors le calculateur génère un ordre pour réduire la poussé générée par le système propulsif en requérant une rétraction de l'actionneur 85. Si le premier interrupteur primaire se ferme alors que le deuxième interrupteur secondaire reste fermé, alors le calculateur maintient l'actionneur dans la position atteinte.

De même, si le deuxième interrupteur primaire s'ouvre et le premier interrupteur secondaire se ferme, alors le calculateur génère un ordre pour augmenter la poussé générée par le système propulsif en requérant une extension de l'actionneur 85. Si le deuxième interrupteur primaire 31 se ferme alors que le deuxième interrupteur secondaire 44 reste fermé, alors le calculateur maintient l'actionneur dans la position atteinte.

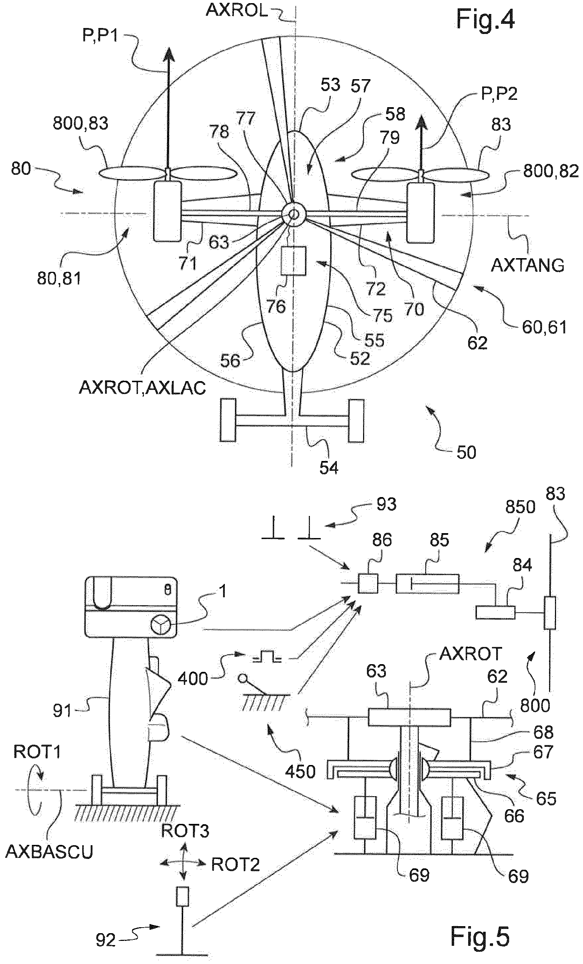

Les figures 4 et 5 présentent un exemple d'aéronef 50 comprenant au moins un système propulsif 80 commandé par un mécanisme de commande 1 selon l'invention.

Ainsi et en référence à la figure 4, le mécanisme de commande électrique 1 selon l'invention peut être agencé sur un aéronef, et par exemple un aéronef à voilure tournante 50 ou giravion.

L'aéronef 50 comporte un fuselage 52. Le fuselage 52 s'étend longitudinalement d'une queue 54 vers un nez 53 le long d'un axe de roulis AXROL. De plus, le fuselage s'étend transversalement le long d'un axe de tangage AXTANG d'un premier flanc, dit « flanc gauche 56 » par commodité, vers un deuxième flanc, dit « flanc droit 55 » par commodité et vu de l'arrière de l'aéronef. Enfin, le fuselage s'étend en élévation d'une surface inférieure 58 vers une surface supérieure 57 le long d'un axe de lacet AXLAC.

L'axe de roulis AXROL et l'axe de lacet AXLAC définissent conjointement un plan antéropostérieur vertical de symétrie du giravion 1.

Classiquement, un train d'atterrissage peut saillir vers le bas de la surface inférieure 58 du fuselage.

L'aéronef comporte une voilure tournante 60 comprenant au moins un rotor principal 61. Ce rotor principal 61 surplombe la surface supérieure 57 du fuselage 52. Le rotor principal 61 est pourvu d'une pluralité de pales 62 reliées par exemple à un moyeu 63. Ces pales 62 sont dites « pales principales » par commodité.

Le rotor principal effectue une rotation autour d'un axe dénommé « axe de rotation principal AXROT » pour participer au moins partiellement à la sustentation voire à la propulsion de l'aéronef.

Par ailleurs, l'aéronef 50 comporte un système propulsif 80 procurant une poussée longitudinale P pour participer au déplacement de ce giravion. Le système propulsif 80 peut tendre à propulser ou à tracter le giravion.

Ce système propulsif 80 peut comprendre au moins une hélice 800 comprenant une pluralité de pales 83 à pas variable.

Par exemple, l'aéronef possède alors une surface sustentatrice 70 qui s'étend sensiblement transversalement de part et d'autre du fuselage. Cette surface sustentatrice 70 peut par exemple comprendre une demi-aile gauche 71 s'étendant à partir du flanc gauche 56 et une demi-aile droite 72 s'étendant à partir du flanc droit 55.

La surface sustentatrice porte alors une hélice 800 dite « première hélice 81 » et une hélice 800 dite « deuxième hélice 82 ». Par exemple, la demi-aile gauche 71 porte la première hélice 81, et la demi-aile droite 72 porte la deuxième hélice 82. La première hélice 81 et la deuxième hélice 82 sont donc agencées transversalement de part et d'autre du fuselage 52.

Chaque hélice produit une poussée P1, P2 générant conjointement la poussée longitudinale P. La première poussée P1 générée par la première hélice 81 peut différer de la deuxième poussée P2 générée par la deuxième hélice 82 pour le contrôle du mouvement en lacet du giravion.

Par ailleurs, l'aéronef 50 comporte une installation motrice 75 pour mettre en mouvement la première hélice 81, la deuxième hélice 82 et le rotor principal 60.

Une telle installation motrice 75 peut comporter au moins un moteur 76 et une chaîne mécanique reliant le moteur à la première hélice 81 ainsi qu'à la deuxième hélice 82 et au rotor principal 60.

Par exemple, la chaîne mécanique inclut une boîte de transmission de puissance 77 munie d'un mât rotor entraînant en rotation le rotor principal. De plus, cette boîte de transmission peut être reliée à une première chaîne de transmission 78 de puissance entraînant en rotation la première hélice 81. De même, cette boîte de transmission peut être reliée à une deuxième chaîne de transmission 79 de puissance entraînant en rotation la deuxième hélice 82.

D'autres architectures sont envisageables.

En référence à la figure 5, l'aéronef 50 comporte de multiples commandes de vol pour commander le déplacement de ce giravion.

En effet, le pas des pales du rotor principal peut être modifié collectivement et cycliquement.

Par exemple, l'aéronef 50 comprend un ensemble de plateaux cycliques 65 muni d'un plateau non tournant 66 et d'un plateau tournant 67. Le plateau non tournant 66 est relié à au moins trois actionneurs dit « actionneurs principaux 69 » de type servocommande par exemple. Le plateau tournant 67 est relié à chaque pale 62 du rotor principal par respectivement une bielle de pas 68.

Dès lors, l'aéronef 50 peut comprendre un levier de pas collectif 91. Ce levier de pas collectif 91 peut effectuer une rotation ROT 1 autour d'un axe de basculement AXBASCU pour piloter les actionneurs principaux de la même manière.

De plus, l'aéronef 50 peut comprendre un manche cyclique 92. Ce manche cyclique 92 peut effectuer une rotation ROT2 autour d'un premier axe et une rotation ROT3 autour d'un deuxième axe pour piloter les actionneurs principaux de manière différente afin de contrôler l'assiette de l'aéronef 50.

En outre, le pas des pales 83 de chaque hélice 800 peut être modifié par un système de modification de pas 850.

A titre illustratif, un système de modification de pas 850 d'une hélice peut comprendre un distributeur hydraulique d'une servocommande 84 alimentant hydrauliquement un vérin. Ce vérin peut être agencé dans un moyeu de l'hélice par un arbre long perforé. Ce distributeur hydraulique peut être piloté par une chaîne de transmission de puissance incluant un vérin électrique 85 par exemple. Ce vérin électrique peut être commandé par un calculateur 86.

Un palonnier 93 peut communiquer avec le calculateur 86, pour piloter le mouvement en lacet de l'aéronef au travers d'une différence de poussée entre la première poussée exercée par la première hélice et la deuxième poussée exercée par la deuxième hélice.

Pour piloter la norme de la poussée longitudinale, un mécanisme de commande électrique 1 selon l'invention peut être implémenté. Par exemple, le bouton 3 est agencé sur le levier de pas collectif 91.

Dès lors, les signaux de commande émis par le mécanisme de commande électrique 1 sont envoyés au calculateur 86. En fonction des signaux reçus, le calculateur 86 ordonne alors aux systèmes de modification de pas 850 des hélices de modifier le pas des pales des hélices.

Par exemple, le calculateur applique au moins une relation mathématique ou sollicite une base de données pour générer les ordres de modification du pas des pales des hélices correspondant à un taux de variation de pas requis par le mécanisme de commande électrique 1.

En effet, le positionnement du pas des hélices peut être asservi via, d'une part la génération d'une commande transmise au calculateur 86 et, d'autre part d'un capteur de position mesurant une information relative au pas d'une pale. Un tel capteur de position peut être relié au calculateur 86. De plus le capteur de position peut être agencé au plus près des pales, par exemple au niveau d'un distributeur hydraulique 84. Le calculateur 86 contrôle alors le vérin électrique 85 pour respecter la commande reçue au regard d'un retour d'information donné par le capteur de position.

Par ailleurs, l'aéronef 50 peut comporter un organe de manœuvre électrique de secours 400 relié au système propulsif 80. Par exemple, cet organe de manœuvre électrique de secours 400 prend la forme d'un bouton poussoir relié au calculateur 86.

Selon un autre aspect, l'aéronef 50 peut comporter un organe de manœuvre mécanique de secours 450 relié au système propulsif. Un tel organe de manœuvre mécanique de secours 450 peut comprendre un levier déplaçant le vérin électrique 85 par exemple.

Par exemple, le mécanisme de commande peut être utilisé à d'autres fins que le pilotage du pas de pales d'une hélice d'un giravion, par exemple pour piloter le pas de pales d'un rotor arrière d'un hélicoptère ayant un rotor principal, pour piloter la pas d'une hélice d'un avion, pour piloter un autre type de moyens propulsifs.

## Revendications

1. Mécanisme de commande (1) électrique muni d'un support (5) et d'un bouton (3), ledit mécanisme de commande (1) comportant un corps central (10) disposé dans le support (5), ledit bouton (3) étant porté par le corps central (10) et présentant un degré de liberté en rotation par rapport au corps central (10), un axe de rotation déporté (AXROTD) dudit bouton (3) étant parallèle à un axe de rotation central (AXROTC), un premier moyen de rappel (20) étant interposé entre le corps central (10) et le bouton (3) et exerçant un effort sur le bouton (3) pour le positionner dans une position neutre (POSN), un deuxième moyen de rappel (23) étant interposé entre le corps central (10) et le support (5) et exerçant un effort sur le corps central (10) pour positionner ledit bouton (3) dans ladite position neutre (POSN); **caractérisé en ce que** le corps central (10) présente uniquement un degré de liberté en rotation autour de l'axe de rotation central (AXROTC) par rapport au support (5), ledit bouton (3) présentant uniquement un degré de liberté en rotation par rapport au corps central (10) autour dudit axe de rotation déporté (AXROTD), ledit mécanisme de commande (1) comprenant deux interrupteurs primaires (31, 34) électriques interposés entre le bouton (3) et le corps central (10) de part et d'autre d'un plan (100) contenant ledit axe de rotation central (AXROTC) et ledit axe de rotation déporté (AXROTD) pour détecter une rotation du bouton par rapport au corps central (10), ledit mécanisme de commande comprenant deux interrupteurs secondaires (41, 44) électriques interposés entre le support (5) et le corps central (10) de part et d'autre dudit plan (100) pour détecter une rotation du corps central (10) par rapport au support (5) ; et **en ce que** le premier moyen de rappel (20) présente une raideur inférieure à la raideur du deuxième moyen de rappel (23).

2. Mécanisme de commande selon la revendication 1, **caractérisé en ce qu'**un rayon (103) d'un cercle (101) centré sur ledit axe de rotation central (AXROTC) est contenu dans ledit plan (100).

3. Mécanisme de commande selon l'une quelconque des revendications 1 à 2,
**caractérisé en ce que** le support (5) est localement ouvert sur un milieu extérieur (EXT), le bouton (3) s'étendant au moins partiellement dans le milieu extérieur (EXT).

4. Mécanisme de commande selon l'une quelconque des revendications 1 à 3,
**caractérisé en ce que** ledit premier moyen de rappel (20) comporte au moins deux organes élastiques (21, 22) situés de part et d'autre dudit plan (100), chaque organe élastique (21, 22) ayant une raideur inférieure au deuxième moyen de rappel (23).

5. Mécanisme de commande selon l'une quelconque des revendications 1 à 4,
**caractérisé en ce que** ledit deuxième moyen de rappel (23) comporte un ressort (24) solidaire dudit support (5) et dudit corps central (10).

6. Mécanisme de commande selon l'une quelconque des revendications 1 à 5,
**caractérisé en ce que** lesdits deux interrupteurs primaires (31, 34) comprennent chacun un contact métallique primaire interne (33, 36) fixé au corps central (10) et un contact métallique primaire externe (32, 35) fixé au bouton (3), le contact métallique primaire interne (33, 36) de chaque interrupteur primaire (31, 34) étant en contact avec le contact métallique primaire externe (32, 35) de cet interrupteur primaire (31, 34) lorsque le bouton (3) est dans la position neutre.

7. Mécanisme de commande selon la revendication 6,
**caractérisé en ce que** ledit contact métallique primaire interne (33, 36) et ledit contact métallique primaire externe (32, 35) de chacun desdits deux interrupteurs primaires (31, 34) comportent chacun une lamelle primaire (110) élastiquement déformable.

8. Mécanisme de commande selon l'une quelconque des revendications 1 à 7,
**caractérisé en ce que** lesdits deux interrupteurs secondaires (41, 44) comprennent chacun un contact métallique secondaire interne (43, 46) fixé au corps central (10) et un contact métallique secondaire externe (42, 45) fixé au support (5), le contact métallique secondaire interne (43, 46) d'un interrupteur secondaire (41, 44) n'étant pas en contact avec le contact métallique secondaire externe (42, 45) de cet interrupteur secondaire (41, 44) lorsque le bouton (3) est dans la position neutre.

9. Mécanisme de commande selon la revendication 8,
**caractérisé en ce que** ledit contact métallique secondaire interne (43, 46) de chacun desdits deux interrupteurs secondaires (41, 44) comporte une lamelle secondaire (120) élastiquement déformable et ledit contact métallique secondaire externe (42, 45) de chacun desdits deux interrupteurs secondaires (41, 44) comporte une lame (130) apte à être en contact contre la lamelle secondaire (120) élastiquement déformable de cet interrupteur secondaire (41, 44).

10. Mécanisme de commande selon les revendications 6 et 8,
**caractérisé en ce que** lesdits contacts métalliques primaires externes (32, 35) desdits deux interrupteurs primaires (31, 34) et lesdits contacts métalliques secondaires externes (42, 45) desdits deux interrupteurs secondaires (41, 44) sont respectivement reliés à quatre liaisons électriques de sortie (151, 152, 153, 154) destinées à être reliées à une masse électrique (150).

11. Mécanisme de commande selon les revendications 6 et 8,
**caractérisé en ce que** lesdits contacts métalliques primaires internes (33, 36) desdits deux interrupteurs primaires (31, 34) et lesdits contacts métalliques secondaires internes (43, 46) desdits deux interrupteurs secondaires (41, 44) sont respectivement reliés à quatre liaisons électriques d'entrée (141, 142, 143, 144) destinées à être reliées à une source d'énergie électrique (140).

12. Mécanisme de commande selon l'une quelconque des revendications 1 à 11,
**caractérisé en ce que** lorsque ledit bouton (3) est dans la position neutre :
- lesdits contacts métalliques primaires internes (33, 36) desdits deux interrupteurs primaires (31, 34) sont disposés symétriquement de part et d'autre dudit plan (100),
- lesdits contacts métalliques secondaires internes (43, 46) desdits deux interrupteurs secondaires (41, 44) sont disposés symétriquement de part et d'autre dudit plan (100),
- lesdits contacts métalliques primaires externes (32, 35) desdits deux interrupteurs primaires (31, 34) sont disposés symétriquement de part et d'autre dudit plan (100),
- lesdits contacts métalliques secondaires externes (42, 45) desdits deux interrupteurs secondaires (41, 44) sont disposés symétriquement de part et d'autre dudit plan (100).

13. Mécanisme de commande selon l'une quelconque des revendications 1 à 12,
**caractérisé en ce que** ledit corps central (10) est articulé au support (5) par une liaison pivot centrale (ARTC), ledit bouton (3) étant articulé au corps central (10) par une liaison pivot déportée (ARTD).

14. Mécanisme de commande selon l'une quelconque des revendications 1 à 13,
**caractérisé en ce que** ledit corps central (10) comporte une âme (11) disposée autour d'une tige de pivot (7) du support (5), ladite âme (11) portant un pion (15) via une tige de liaison (14), ledit bouton (3) comprenant un renfoncement dans lequel est disposé le pion (15).

15. Aéronef (50) comprenant au moins un système propulsif (80) générant une poussée,
**caractérisé en ce que** ledit aéronef (50) comporte un mécanisme de commande (1) électrique selon l'une quelconque des revendications 1 à 14, ledit mécanisme de commande (1) électrique étant relié au système propulsif (80) pour contrôler au moins partiellement ladite poussée.

16. Aéronef (50) selon la revendication 15,
**caractérisé en ce que** ledit système propulsif (80) comprenant une pluralité de pales (83) à pas variable, ledit système propulsif (80) comprenant un système de modification de pas (850) pour modifier ledit pas, ledit mécanisme de commande (1) est relié à un calculateur (86), ledit calculateur (86) commandant ledit système de modification de pas (850).

17. Procédé pour commander un système propulsif (80) avec un mécanisme de commande (1) selon l'une quelconque des revendications 1 à 14,
**caractérisé en ce que** le bouton (3) étant dans la position neutre, lesdits deux interrupteurs primaires (31, 34) électriques et lesdits deux interrupteurs secondaires (41, 44) électriques étant soit dans un état initial fermé ou soit dans un état initial ouvert, le procédé comporte successivement les étapes suivantes :
- génération et transmission d'un ordre pour modifier une poussée générée par ledit système propulsif (80) lorsque seuls un interrupteur primaire électrique et un interrupteur secondaire électrique situés de part et d'autre dudit plan changent d'état,
- arrêt de ladite transmission dès qu'un desdits interrupteur primaire électrique et interrupteur secondaire électrique ayant changé d'état retourne dans son état initial.

## Patentansprüche

1. Elektrischer Steuermechanismus (1) mit einem Träger (5) und einem Knopf (3), wobei der Steuermechanismus (1) einen zentralen Körper (10) aufweist, der in dem Träger (5) angeordnet ist, wobei der Knopf (3) von dem zentralen Körper (10) getragen ist und einen Rotationsfreiheitsgrad relativ zu dem zentralen Körper (10) aufweist, wobei eine versetzte Rotationsachse (AXROTD) des Knopfes (3) parallel zu einer zentralen Rotationsachse (AXROTC) ist, ein erstes Rückstellmittel (20) zwischen dem zentralen Körper (10) und dem Knopf (3) angeordnet ist und eine Kraft auf den Knopf (3) ausübt, um ihn in eine neutrale Position (POSN) zu bringen, und ein zweites Rückstellmittel (23) zwischen dem zentralen Körper (10) und dem Träger (5) angeordnet ist und eine Kraft auf den zentralen Körper (10) ausübt, um den Knopf (3) in die neutrale Position (POSN) zu bringen;
**dadurch gekennzeichnet, dass** der zentrale Körper (10) in Bezug auf den Träger (5) nur einen Freiheitsgrad der Rotation um die zentrale Rotationsachse (AXROTC) aufweist, dass der Knopf (3) in Bezug auf den zentralen Körper (10) nur einen Freiheitsgrad der Rotation um die versetzte Rotationsachse (AXROTD) aufweist, dass der Steuermechanismus (1) zwei primäre elektrische Schalter (31, 34) aufweist, die zwischen dem Knopf (3) und dem zentralen Körper (10) auf beiden Seiten einer Ebene (100) angeordnet sind, die die zentrale Drehachse (AXROTC) und die versetzte Drehachse (AXROTD) enthält, um eine Drehung des Knopfes relativ zum zentralen Körper (10) zu erfassen, dass der Steuermechanismus zwei elektrische Sekundärschalter (41, 44) aufweist, die zwischen dem Träger (5) und dem zentralen Körper (10) auf beiden Seiten der Ebene (100) angeordnet sind, um eine Drehung des zentralen Körpers (10) relativ zum Träger (5) zu erfassen; und dass das erste Rückstellmittel (20) eine Steifigkeit aufweist, die geringer ist als die Steifigkeit des zweiten Rückstellmittels (23).

2. Steuermechanismus nach Anspruch 1,
**dadurch gekennzeichnet, dass** ein Radius (103) eines Kreises (101), der auf die zentrale Drehachse (AXROTC) zentriert ist, in der Ebene (100) enthalten ist.

3. Steuermechanismus nach einem der Ansprüche 1 bis 2,
**dadurch gekennzeichnet, dass** der Träger (5) lokal zu einem externen Medium (EXT) hin offen ist, wobei sich der Knopf (3) zumindest teilweise in das externe Medium (EXT) erstreckt.

4. Steuermechanismus nach einem der Ansprüche 1 bis 3,
**dadurch gekennzeichnet, dass** das erste Rückstellmittel (20) mindestens zwei elastische Elemente (21, 22) umfasst, die beiderseits der Ebene (100) angeordnet sind, wobei jedes elastische Element (21, 22) eine geringere Steifigkeit als das zweite Rückstellmittel (23) aufweist.

5. Steuermechanismus gemäß einem der Ansprüche 1 bis 4,
**dadurch gekennzeichnet, dass** das zweite Rückstellmittel (23) eine Feder (24) umfasst, die fest mit dem Träger (5) und dem Zentralkörper (10) verbunden ist.

6. Steuermechanismus nach einem der Ansprüche 1 bis 5,
**dadurch gekennzeichnet, dass** die beiden Primärschalter (31, 34) jeweils einen primären inneren metallischen Kontakt (33, 36), der an dem zentralen Körper (10) befestigt ist, und einen primären äußeren metallischen Kontakt (32, 35), der an dem Knopf (3) befestigt ist, umfassen, wobei der primäre innere metallische Kontakt (33, 36) jedes Primärschalters (31, 34) mit dem primären äußeren metallischen Kontakt (32, 35) dieses Primärschalters (31, 34) in Kontakt steht, wenn sich der Knopf (3) in der neutralen Position befindet.

7. Steuermechanismus nach Anspruch 6,
**dadurch gekennzeichnet, dass** der primäre innere metallische Kontakt (33, 36) und der primäre äußere metallische Kontakt (32, 35) jedes der beiden Primärschalter (31, 34) jeweils eine primäre elastisch verformbare Lamelle (110) aufweisen.

8. Steuermechanismus nach einem der Ansprüche 1 bis 7,
**dadurch gekennzeichnet, dass** die beiden Sekundärschalter (41, 44) jeweils einen sekundären inneren metallischen Kontakt (43, 46), der an dem zentralen Körper (10) befestigt ist, und einen sekundären äußeren metallischen Kontakt (42, 45), der an dem Träger (5) befestigt ist, aufweisen, wobei der sekundäre innere metallische Kontakt (43, 46) eines Sekundärschalters (41, 44) mit dem sekundären äußeren metallischen Kontakt (42, 45) dieses Sekundärschalters (41, 44) nicht in Kontakt steht, wenn sich der Knopf (3) in der Neutralstellung befindet.

9. Steuermechanismus nach Anspruch 8,
**dadurch gekennzeichnet, dass** der sekundäre innere sekundäre metallische Kontakt (43, 46) jedes der beiden Sekundärschalter (41, 44) eine sekundäre elastisch verformbare Lamelle (120) aufweist und der sekundäre äußere metallische Kontakt (42, 45) jedes der beiden Sekundärschalter (41, 44) eine Zunge (130) aufweist, die geeignet ist, mit der sekundären elastisch verformbaren Lamelle (120) dieses Sekundärschalters (41, 44) in Kontakt zu stehen.

10. Steuermechanismus nach den Ansprüchen 6 und 8,
**dadurch gekennzeichnet, dass** die primären äußeren metallischen Kontakte (32, 35) der beiden Primärschalter (31, 34) und die sekundären äußeren metallischen Kontakte (42, 45) der beiden Sekundärschalter (41, 44) jeweils mit vier elektrischen Ausgangsanschlüssen (151, 152, 153, 154) verbunden sind, die vorgesehen sind, mit einer elektrischen Masse (150) verbunden zu werden.

11. Steuermechanismus nach den Ansprüchen 6 und 8,
**dadurch gekennzeichnet, dass** die primären inneren metallischen Kontakte (33, 36) der beiden Primärschalter (31, 34) und die sekundären inneren metallischen Kontakte (43, 46) der beiden Sekundärschalter (41, 44) jeweils mit vier elektrischen Eingangsanschlüssen (141, 142, 143, 144) zur Verbindung mit einer elektrischen Energiequelle (140) verbunden sind.

12. Steuermechanismus gemäß einem der Ansprüche 1 bis 11, **dadurch gekennzeichnet, dass**, wenn sich der Knopf (3) in der neutralen Position befindet:
- die primären inneren metallischen Kontakte (33, 36) der beiden Primärschalter (31, 34) symmetrisch auf beiden Seiten der Ebene (100) angeordnet sind,
- die sekundären inneren metallischen Kontakte (43, 46) der beiden Sekundärschalter (41, 44) symmetrisch auf beiden Seiten der Ebene (100) angeordnet sind,
- die primären äußeren metallischen Kontakte (32, 35) der beiden Primärschalter (31, 34) symmetrisch auf beiden Seiten der Ebene (100) angeordnet sind,
- die sekundären äußeren metallischen Kontakte (42, 45) der beiden Sekundärschalter (41, 44) symmetrisch auf beiden Seiten der Ebene (100) angeordnet sind.

13. Steuermechanismus nach einem der Ansprüche 1 bis 12,
**dadurch gekennzeichnet, dass** der zentrale Körper (10) an dem Träger (5) durch ein zentrales Drehgelenk (ARTC) angelenkt ist, und dass der Knopf (3) an dem Zentralkörper (10) durch ein versetztes Drehgelenk (ARTD) angelenkt ist.

14. Steuermechanismus nach einem der Ansprüche 1 bis 13,
**dadurch gekennzeichnet, dass** der zentrale Körper (10) einen Kern (11) aufweist, der um eine Schwenkstange (7) des Trägers (5) herum angeordnet ist, dass der Kern (11) über eine Verbindungsstange (14) einen Stift (15) trägt, und dass der Knopf (3) eine Aussparung aufweist, in der der Stift (15) angeordnet ist.

15. Luftfahrzeug (50) mit mindestens einem schuberzeugenden Antriebssystem (80),
**dadurch gekennzeichnet, dass** das Luftfahrzeug (50) einen elektrischen Steuermechanismus (1) nach einem der Ansprüche 1 bis 14 umfasst, wobei der elektrische Steuermechanismus (1) mit dem Antriebssystem (80) verbunden ist, um den Schub zumindest teilweise zu steuern.

16. Luftfahrzeug (50) nach Anspruch 15,
**dadurch gekennzeichnet, dass** das Antriebssystem (80) eine Mehrzahl von Blättern (83) mit variabler Steigung umfasst, dass das Antriebssystem (80) ein Steigungsverstellsystem (850) zum Verstellen der Steigung umfasst, dass der Steuermechanismus (1) mit einem Computer (86) verbunden ist, und dass der Computer (86) das Steigungsverstellsystem (850) steuert.

17. Verfahren zum Steuern eines Antriebssystems (80) mit einem Steuermechanismus (1) nach einem der Ansprüche 1 bis 14,
**dadurch gekennzeichnet, dass**, wenn sich der Knopf (3) in der neutralen Position befindet und die beiden primären elektrischen Schalter (31, 34) und die beiden sekundären elektrischen Schalter (41, 44) sich entweder in einem geschlossenen Anfangszustand oder in einem offenen Anfangszustand befinden, das Verfahren nacheinander die folgenden Schritte umfasst
- Erzeugen und Übertragen eines Befehls zum Verstellen eines von dem Antriebssystem (80) erzeugten Schubs, wenn nur ein primärer elektrischer Schalter und ein sekundärer elektrischer Schalter, die sich beiderseits der Ebene befinden, ihren Zustand ändern,
- Stoppen der Übertragung, sobald einer der elektrischen Primärschalter und der elektrischen Sekundärschalter, deren Zustand sich geändert hat, in seinen Ausgangszustand zurücckehrt.

## Claims

1. Electric control mechanism (1) provided with a support (5) and a button (3), wherein said control mechanism (1) comprises a central body (10) arranged on the support (5), wherein said button (3) is borne by the central body (10) and has a degree of freedom in rotation relative to the central body (10), wherein a remote axis of rotation (AXROTD) of said button (3) is parallel to a central axis of rotation (AXROTC), a first return means (20) being interposed between the central body (10) and the button (3) and exerting a force on the button (3) to position it in a neutral position (POSN), a second return means (23) being interposed between the central body (10) and the support (5) and exerting a force on the central body (10) to position said button (3) in said neutral position (POSN);
**characterized in that** the central body (10) has only one degree of freedom in rotation about the central axis of rotation (AXROTC) relative to the support (5), wherein said button (3) has only one degree of freedom in rotation relative to the central body (10) around said offset axis of rotation (AXROTD), wherein said control mechanism (1) comprises two primary electrical switches (31, 34) interposed between the button (3) and the central body (10) on either side of a plane (100) containing said central axis of rotation (AXROTC) and said offset axis of rotation (AXROTD) for detecting a rotation of the button relative to the central body (10), wherein said control mechanism comprises two secondary electrical switches (41, 44) interposed between the support (5) and the central body (10) on either side of said plane (100) to detect a rotation of the central body (10) relative to the support (5);
and wherein the first return means (20) has a stiffness less than the stiffness of the second return means (23).

2. Control mechanism according to claim 1, **characterized in that** a radius (103) of a circle (101) centred on said central axis of rotation (AXROTC) is contained in said plane (100).

3. Control mechanism according to either of claims 1 to 2, **characterized in that** the support (5) is locally open on an external medium (EXT), wherein the button (3) extends at least partially in the external environment (EXT).

4. Control mechanism according to any one of claims 1 to 3, **characterized in that** said first return means (20) comprises at least two elastic members (21, 22) located on either side of said plane (100), each elastic member (21, 22) having a stiffness less than the second return means (23).

5. Control mechanism according to any one of claims 1 to 4, **characterized in that** said second return means (23) comprises a spring (24) integral with said support (5) and said central body (10).

6. Control mechanism according to any one of claims 1 to 5, **characterized in that** said two primary switches (31, 34) each include an internal primary metal contact (33, 36) fixed to the central body (10) and an external primary metal contact (32, 35) fixed to the button (3), the internal primary metal contact (33, 36) of each primary switch (31, 34) being in contact with the external primary metal contact (32, 35) of this primary switch (31, 34) when the button (3) is in the neutral position.

7. Control mechanism according to claim 6, **characterized in that** said internal primary metal contact (33, 36) and said external primary metal contact (32, 35) of each of said two primary switches (31, 34) each have an elastically deformable primary strip (110).

8. Control mechanism according to any one of claims 1 to 7, **characterized in that** said two secondary switches (41, 44) each include an internal secondary metal contact (43, 46) fixed to the central body (10) and an external secondary metal contact (42, 45) fixed to the support (5), wherein the internal secondary metal contact (43, 46) of a secondary switch (41, 44) is not in contact with the external secondary metal contact (42, 45) of this secondary switch (41, 44) when the button (3) is in the neutral position.

9. Control mechanism according to claim 8, **characterized in that** said internal secondary metal contact (43, 46) of each of said two secondary switches (41, 44) comprises an elastically deformable secondary strip (120) and said external secondary metal contact (42, 45) of each of said two secondary switches (41, 44) comprises a blade (130) capable of being in contact against the elastically deformable secondary strip (120) of this secondary switch (41, 44).

10. Control mechanism according to claims 6 and 8, **characterized in that** said external primary metal contacts (32, 35) of said two primary switches (31, 34) and said external secondary metal contacts (42, 45) of said two secondary switches (41, 44) are respectively connected to four electrical output connections (151, 152, 153, 154) intended to be connected to an electrical ground (150).

11. Control mechanism according to claims 6 and 8, **characterized in that** said internal primary metal contacts (33, 36) of said two primary switches (31, 34) and said internal secondary metal contacts (43, 46) of said two secondary switches (41, 44) are respectively connected to four electrical input connections (141, 142, 143, 144) intended to be connected to a source of electrical energy (140).

12. Control mechanism according to any one of claims 1 to 11, **characterized in that** when said button (3) is in the neutral position:
- said primary internal metal contacts (33, 36) of said two primary switches (31, 34) are arranged symmetrically on either side of said plane (100),
- said internal secondary metal contacts (43, 46) of said two secondary switches (41, 44) are arranged symmetrically on either side of said plane (100),
- said primary external metal contacts (32, 35) of said two primary switches (31, 34) are arranged symmetrically on either side of said plane (100),
- said external secondary metal contacts (42, 45) of said two secondary switches (41, 44) are arranged symmetrically on either side of said plane (100).

13. Control mechanism according to any one of claims 1 to 12, **characterized in that** said central body (10) is hinged to the support (5) by a central pivot link (ARTC), said button (3) being hinged to the central body (10) by an offset pivot link (ARTD).

14. Control mechanism according to any one of claims 1 to 13, **characterized in that** said central body (10) comprises a core (11) arranged around a pivot shaft (7) of the support (5), said core (11) carrying a pin (15) via a connecting shaft (14), said button (3) comprising a recess in which the pin (15) is arranged.

15. Aircraft (50) comprising at least one propulsion system (80) generating a thrust, **characterized in that** said aircraft (50) comprises an electric control mechanism (1) according to any one of claims 1 to 14, said electric control mechanism (1) being connected to the propulsion system (80) to at least partially control said thrust.

16. Aircraft (50) according to claim 15, **characterized in that** said propulsion system (80) comprises a plurality of blades (83) with variable pitch, and said propulsion system (80) comprises a pitch modification system (850) to modify said pitch, wherein said control mechanism (1) is connected to a computer (86), with said computer (86) controlling said pitch modification system (850).

17. Method for controlling a propulsion system (80) with a control mechanism (1) according to any one of claims 1 to 14, **characterized in that** when the button (3) is in the neutral position, said two primary electrical switches (31, 34) and said two secondary electrical switches (41, 44) are either in a closed initial state or in an open initial state, wherein the method successively comprises the following steps:
- generation and transmission of an order to modify a thrust generated by said propulsion system (80) when only a primary electrical switch and a secondary electrical switch located on either side of said plane change state,
- stopping said transmission as soon as one of said electrical primary switches and electrical secondary switches, having changed state, returns to its initial state.
